# EUROPÄISCHE PATENTSCHRIFT

(11) **EP 1 650 444 B1**
(45) Veröffentlichungstag und Bekanntmachung des Hinweises auf die Patenterteilung: **24.10.2007**
(21) Anmeldenummer: 05020763.8
(22) Anmeldetag: 23.09.2005
(51) Int. Cl.: F16B 5/02, F16B 43/00, B62D 27/06

(54) **Anordnung zur Befestigung eines Kunstoffbauteils an einem Trägerteil**
Assembly for fastening a plastic component to a support element
Dispositif pour la fixation d'une pièce en plastique sur une partie de support

(30) Priorität: 20.10.2004 DE 102004050998
(43) Veröffentlichungstag der Anmeldung: 26.04.2006
(73) Patentinhaber: LuK Lamellen und Kupplungsbau Beteiligungs KG, 77815 Bühl (DE)
(72) Erfinder: Panther, Urban, 77960 Seelbach (DE); Hans, Dominik, 76461 Muggensturm (DE)

(56) Entgegenhaltungen:
- EP-A- 0 272 642
- DE-A1- 19 835 695
- PATENT ABSTRACTS OF JAPAN Bd. 1997, Nr. 10, 31. Oktober 1997 (1997-10-31) & JP 09 166123 A (JAPAN DRIVE-IT CO LTD), 24. Juni 1997 (1997-06-24)

## Beschreibung

Die vorliegende Erfindung betrifft eine Anordnung zur Verbindung eines Kunststoffbauteils mit einer Schraube mit einem Schraubenkopf, einer Hülse sowie einem Trägerteil, wobei das Kunststoffbauteil eine Durchgangsbohrung aufweist, in der die Hülse aufgenommen ist, durch die die Schraube in eine Gegenbohrung des Trägerteils ragt und mit Befestigungsmitteln mit dem Trägerteil verbunden ist, wobei der Schraubenkopf einen Anschlagring umfasst und auf der dem Trägerteil abgewandten Seite des Kunststoffbauteils angeordnet ist. Eine Anordnung gemäß dem Oberbegriff des Anspruchs 1 ist aus der DE-A1-198 35 695 bekannt.

Werden Kunststoffteile mit Hilfe von Schrauben an anderen Bauteilen befestigt, so ist es notwendig, in die Befestigungsbohrung des Kunststoffteils eine Metallhülse einzulegen. Bei angezogener Schraube kommt der Schraubenkopf sowohl auf der Hülse als auch auf dem Kunststoffbauteil zu liegen. Die Länge der Metallhülse muss dabei der Dicke des Kunststoffteils entsprechen, um eine gleichmäßige Vorspannung der Hülse sowie des Kunststoffteils zu erlangen.

Je nach Bauteilgeometrie und deren Toleranzen ist es schwierig, eine definierte Flächenpressung der Hülse und des Kunststoffteils zu erlangen. Es können Situationen auftreten, in denen entweder nur die Metallhülse oder nur das Kunststoffteil die gesamte Vorspannkraft aufnehmen. Eine definierte Verteilung der Vorspannkraft ist aber notwendig, da die Schraube über Lebensdauer unter Spannung gehalten werden muss, um sich durch Vibrationen nicht von selbst zu lösen. Das Kunststoffteil kann Vorspannungen nicht auf Dauer aufrechterhalten, da es bei erhöhten Temperaturen relaxiert und innere Spannungen abbaut. Im Gegenzug darf die Vorspannkraft der Schraube nicht ausschließlich über die Hülse geleitet werden, da dann das Kunststoffbauteil spielbehaftet befestigt wäre.

Aufgabe der vorliegenden Erfindung ist es daher, eine Anordnung der eingangs genannten Art bereitzustellen, die eine definierte Aufteilung der Vorspannkraft bzw. Flächenpressung zwischen Kunststoffteil und Hülse bietet.

Dieses Problem wird gelöst durch eine Anordnung umfassend ein Kunststoffbauteil, eine Schraube mit einem Schraubenkopf, eine Hülse sowie ein Trägerteil, wobei das Kunststoffbauteil eine Durchgangsbohrung aufweist, in der die Hülse aufgenommen ist, durch die die Schraube in eine Gegenbohrung des Trägerteils ragt und mit Befestigungsmitteln mit dem Trägerteil verbunden ist, wobei der Schraubenkopf einen Anschlagring umfasst und auf der dem Trägerteil abgewandten Seite des Kunststoffbauteils angeordnet ist, dadurch gekennzeichnet, dass das Kunststoffbauteil mindestens einen Steg umfasst, der auf mindestens einer Seite der Durchgangsbohrung über die Oberfläche des Kunststoffbauteils hinausragt, wobei die axiale Dicke des Kunststoffbauteils einschließlich Steg größer ist als die Länge der Hülse und die axiale Dicke des Kunststoffbauteils ohne Steg kleiner ist als die Länge der Hülse. Unter Befestigungsmitteln wird hier sowohl eine Gewindebohrung in dem Trägerteil als auch eine Durchgangsbohrung mit auf der Gegenseite angeordneten Muttern verstanden. Der Anschlagring des Schraubenkopfes kann an diesen angeformt sein, kann aber auch insbesondere zum Beispiel bei einer Inbusschraube, schlicht die Unterseite des Schraubenkopfes darstellen. Ebenso ist es möglich, zum Beispiel eine Sechskantschraube unmittelbar in der Anordnung zu verwenden, wobei diese als Anschlagring dann die sechseckförmige Unterseite aufweist. Der Steg des Kunststoffbauteils bewirkt, dass die Hülse zwar länger ist als das eigentliche Kunststoffbauteil dick ist, dieses mit dem Steg jedoch bei eingesetzter Hülse über diese hinausragt. Der Steg ist vorzugsweise aus dem gleichen Material wie das Kunststoffbauteil gefertigt, kann aber auch aus einem härteren bzw. weicheren Material, zum Beispiel als Einlage während eines Spritzgussprozesses, hergestellt sein.

In einer bevorzugten Ausgestaltung ist vorgesehen, dass sich der Steg bei Anziehen der Schraube plastisch und/oder elastisch verformt bis der Anschlagring auf der Hülse aufliegt. Dabei ist vorzugsweise vorgesehen, dass sich der Steg bei anziehen der Schraube zunächst elastisch verformt, bis die Fließgrenze des Kunststoffes erreicht ist, und danach eine plastische Verformung einsetzt. Dadurch, dass die Verformung bis in den plastischen Bereich getrieben wird, erhält man eine definierte Vorspannkraft, da in jedem Fall ein Teil des Steges plastisch verdrängt wird und damit ein - unabhängig von Fertigungstoleranzen etwa gleich bleibender - elastisch verformter Bereich des Steges übrig bleibt.

In einer weiteren bevorzugten Ausgestaltung ist vorgesehen, dass sich der Steg in Umfangsrichtung vollständig um die Durchgangsbohrung erstreckt. Abhängig von dem relativen Durchmesser des Schraubenkopfes bzw. Anschlagringes gegenüber dem Steg kann es sinnvoll sein, Bereiche zu schaffen, in die der plastisch verdrängte Kunststoff fließen kann. Dazu können zum Beispiel nutartige Einschnitte oder dergleichen vorgesehen sein, beispielsweise kann der Steg in radialer Richtung zumindest teilweise unterbrochen sein.

Das Trägerteil ist vorzugsweise aus einem Metall mit einer Gewindebohrung als Befestigungsmittel gefertigt, alternativ kann das Trägerteil aus einem Kunststoff mit einem Gewindeeinsatz als Befestigungsmittel gefertigt sein. Ebenso kann das Befestigungsmittel eine Mutter sein.

In einer ersten bevorzugten Ausführungsform ist vorgesehen, dass die Stege unter dem Schraubenkopf angeordnet sind. In einer zweiten Ausführungsform ist vorgesehen, dass die Stege auf der dem Schraubenkopf abgewandten Seite des Kunststoffbauteils angeordnet sind. Die zweite Ausführungsform hat den Vorteil, dass der Schraubenkopf bzw. der Anschlagring flächig auf der Oberfläche des Kunststoffbauteils aufliegt und so die Flächenpressung gegenüber der ersten Ausführungsform verringert werden kann. Bei der zweiten Ausführungsform ist vorzugsweise vorgesehen, dass an dem Steg mindestens eine Ausnehmung in dem Kunststoffbauteil angeordnet ist, sodass plastisch verformte Anteile des Steges in diese verdrängt werden können. Die Ausnehmung kann beispielsweise eine radiale Schräge der Durchgangsbohrung oder eine Vertiefung des Kunststoffbauteils sein.

Das eingangs genannte Problem wird auch gelöst durch einen Geber- oder Nehmerzylinder eines hydraulischen Systems für Kraftfahrzeuge, insbesondere eines hydraulischen Systems umfassend einen Geberzylinder und einen Nehmerzylinder sowie eine diese verbindende Druckleitung, wobei der Geber- und/oder Nehmerzylinder teilweise aus Kunststoff und teilweise aus Metall gefertigt ist, wobei zumindest eine Verbindung zwischen Kunststoff- und Metallteilen durch eine Anordnung nach einem der vorhergehenden Ansprüche ausgeführt ist.

Im Folgenden werden Ausführungsbeispiele der Erfindung anhand der beiliegenden Zeichnungen erläutert. Dabei zeigen:
Fig. 1 eine erfindungsgemäße Anordnung im Schnitt im unverformten Zustand;
Fig. 2 die Einzelheit X gemäß Fig. 1;
Fig. 3 eine erfindungsgemäße Anordnung im verformten Zustand;
Fig. 4 die Einzelheit X gemäß Fig. 3.

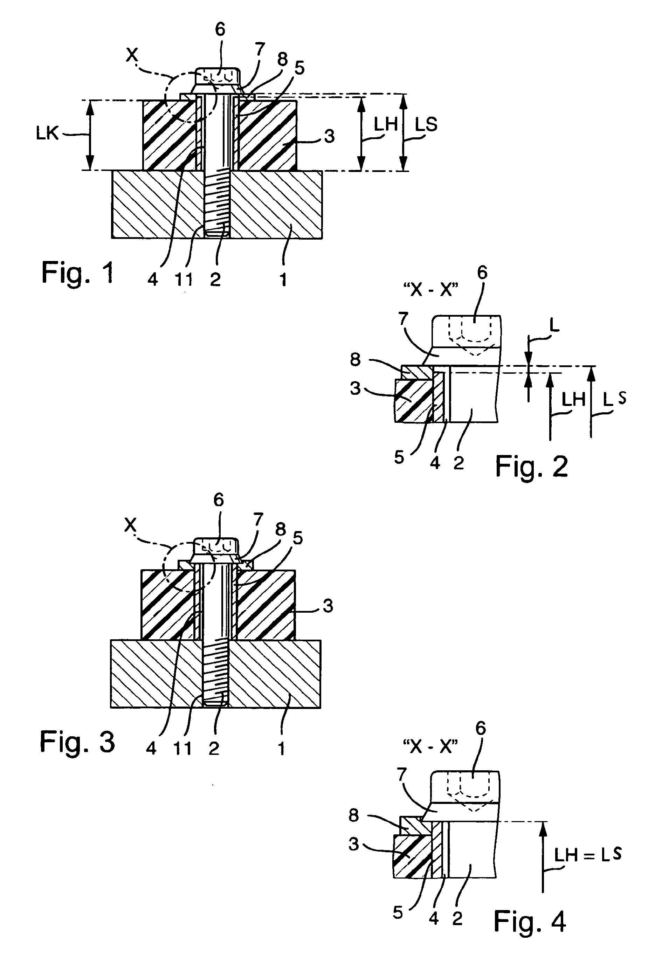

Fig. 1 zeigt ein Trägerteil 1, an der mittels einer Schraube 2 ein Kunststoffbauteil 3 befestigt ist. Das Trägerteil 1 ist zum Beispiel aus Metall gefertigt, wobei in eine Gegenbohrung 11 ein zum Gewinde der Schraube 2 korrespondierendes Innengewinde geschnitten ist. In dem Kunststoffbauteil 3 ist eine Durchgangsbohrung 4 angeordnet, in die eine Abstandhülse 5 eingebracht ist. Der Innendurchmesser der Abstandhülse 5 ist größer als der Außendurchmesser der Schraube 2. Die Abstandhülse 5 kann zum Beispiel mit einer Spiel-, Übergangs- oder auch Presspassung in das Kunststoffbauteil 4 eingebracht sein. Die Schraube 2 umfasst einen Schraubenkopf 6, der auf seiner dem Kunststoffbauteil 3 zugewandten Seite einen umlaufenden Anschlagring 7 aufweist. Der Anschlagring kann wie hier dargestellt die Unterseite eines konischen Fortsatzes des Schraubenkopfes sein, kann aber auch insbesondere bei Inbusschrauben direkt die dem Gewinde zugewandte Unterseite des Schraubenkopfes darstellen. Der Außendurchmesser des Anschlagrings 7 ist größer als der Außendurchmesser der Abstandhülse 5.

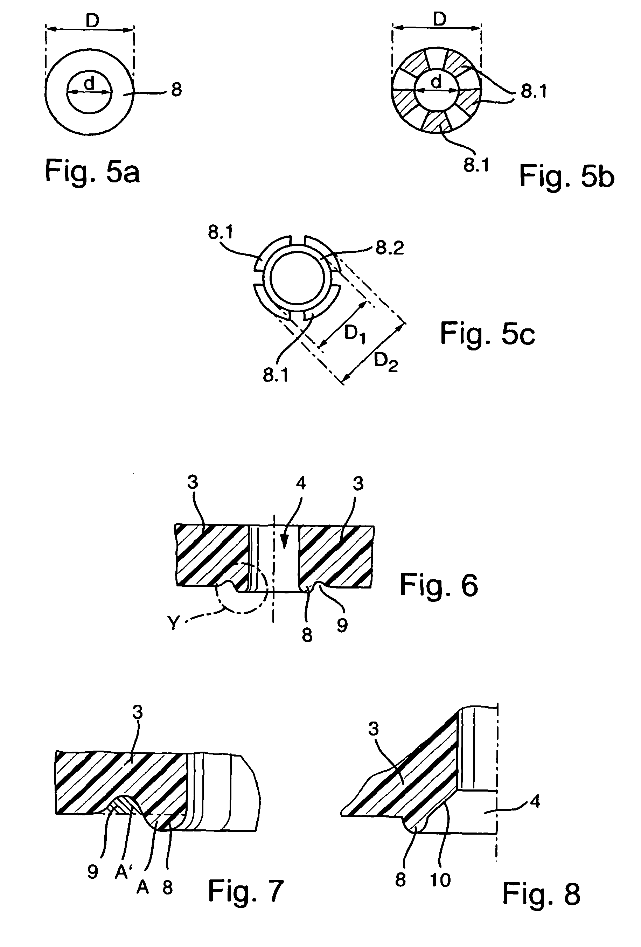

An das Kunststoffbauteil 3 ist ein Steg 8 angeformt, durch den die Durchgangsbohrung 4 hindurchgeht. Anhand der Fig. 5 werden verschiedene Ausgestaltungen des Steges 8 dargestellt. In einer ersten Ausführungsform gemäß Fig. 5a ist der Steg 8 ähnlich einer Unterlegscheibe geformt. In den Darstellungen der Figuren 5a bis c ist der Steg jeweils in der Draufsicht dargestellt, wobei das Kunststoffbauteil 3 sowie die Schraube 2 bzw. der Schraubenkopf 6 jeweils nicht dargestellt sind. Der Innendurchmesser d des Steges 8 und damit der Durchgangsbohrung 4 ist, wie zuvor angedeutet, in etwa so groß wie der Außendurchmesser der Abstandhülse 5, so dass sich eine Spiel-, Übergangs- oder Presspassung ergibt. Der Außendurchmesser D des Steges 8 ist größer als der Außendurchmesser des Anschlagringes 7 des Schraubenkopfes 6. Die axiale Dicke LS des Kunststoffbauteils 3 einschließlich des Steges 8 ist größer ist als die Länge LH der Hülse 5, welche wiederum größer ist als die axiale Dicke LK des Kunststoffbauteils 3 ohne den Steg 8.

In Fig. 5b ist eine alternative Ausführungsform dargestellt, bei dieser wird der Steg 8 durch einzelne Segmente 8.1 gebildet, wobei zwischen den Segmenten 8.1 jeweils zwischen Innendurchmesser d und Außendurchmesser D kein Material vorhanden ist. Betrachtet man den Steg 8 gemäß Fig. 5b für sich genommen, so sind die einzelnen Segmente 8.1 in Umfangsrichtung des Steges 8 nicht miteinander verbunden, so dass sich einzelne durchgehende radiale Nuten zwischen diesen ergeben.

In Fig. 5c ist ein drittes Ausführungsbeispiel des Steges 8 dargestellt, bei diesem handelt es sich um eine Kombination der Ausführungsformen gemäß Fig. 5a und Fig. 5b. In einem inneren Bereich 8.2, der vom Innendurchmesser d bis zu einem inneren Außendurchmesser D1 geht, ist der Steg 8 umlaufend ausgebildet, zwischen dem inneren Außendurchmesser D1 und dem äußeren Außendurchmesser D2 ist der Steg 8 entsprechend der Darstellung der Fig. 5b aus einzelnen Segmenten gebildet. Der Außendurchmesser D2 ist auch hier größer als der Außendurchmesser Anschlagringes 7, der Außendurchmesser D1 ist kleiner als dieser.

Fig. 2 zeigt den Ausschnitt X gemäß Fig. 1 in vergrößerter Darstellung. Der Anschlagring 7 berührt beim Einschrauben hier gerade eben den Steg 8, es wird durch die Schraube 2 keine Druckkraft auf Trägerteil 1 und Kunststoffbauteil 3 ausgeübt. Auch hier ist zu erkennen, dass die axiale Dicke LS des Kunststoffbauteils 3 einschließlich des Steges 8 größer ist als die Länge LH der Hülse 5, welche wiederum größer ist als die axiale Dicke LK des Kunststoffbauteils 3 ohne den Steg 8. Zwischen der Unterseite des Schraubenkopfes 6 und der dem Schraubenkopf zugewandten Oberkante der Abstandshülse 5 verbleibt ein Abstand L. In Fig. 1 und 2 dargestellt ist eine Position, bei der die Schraube 2 gerade so weit eingeschraubt ist, dass diese den Steg 8 berührt. Wird die Schraube 2 nun weiter angezogen, so presst sich der Anschlagring 7 des Schraubenkopfes 6 in den Steg hinein, wie dies in Fig. 3 und entsprechend der Darstellung der Fig. 2 vergrößert in Fig. 4 gezeigt wird. Die Schraube 2 wird nun so weit eingeschraubt, bis der Abstand L wie in Fig. 4 dargestellt nahezu oder vollständig verschwindet. Bleibt auch im festgeschraubten Zustand ein Abstand L übrig, so ist die Hülse 5 mit einen Spiel in der Bohrung bzw. zwischen Trägerteil 2 und Schraubenkopf 6 aufgenommen. Verschwindet der Abstand L vollständig, wie dies z.B. in Fig. 4 dargestellt ist, so wird auch die Abstandhülse 5 eingespannt zwischen Schraubenkopf 6 und Trägerteil 2, so dass auch diese ein Teil der durch die Schraube 2 ausgeübten Andruckkraft aufnimmt. Der Steg 8 wird dabei teilweise plastisch, teilweise elastisch verformt. Je nach Art des verwendeten Kunststoffes kann sich hier auch eine vollständige elastische Verformung ergeben.

Wie aus den Figuren 1 bis 4 zu erkennen ist, ist die Höhe des Steges auf dem Kunststoffteil so ausgelegt, dass die Gesamthöhe des Flansches in jeder Toleranzlage größer ist als die Länge der Abstandshülse. Die vom Schraubenkopf überdeckte Fläche der Stege ist so ausgelegt, dass ein definierter Anteil der Schraubenvorspannkraft eine plastische Verformung der Stege bewirkt. Beim Anschrauben kommt der Schraubenkopf zuerst auf den Stegen zu liegen. Beim Erreichen der maximalen Druckspannung des Kunststoffwerkstoffes verformen sich die Stege plastisch. Dadurch hat die Vorspannkraft im Kunststoffteil ihren definierten Wert erreicht. Der restliche Anteil der Vorspannkraft wird über die Abstandshülse abgestützt, sobald der Abstand L Null wird.

Alternativ ist es möglich, die Stege nicht unter dem Schraubenkopf zu platzieren, sondern vielmehr in der Trennfuge zwischen Kunststoffteil 3 und Trägerteil 1. Vorteilhaft bei dieser Ausgestaltung ist die maximierte Auflagefläche zwischen Kunststoffteil 3 und Schraubenkopf 6 bzw. Anschlagring 7, was im Betrieb zu einer minimierten Flächenpressung unter dem Schraubenkopf 6 bzw. Anschlagring 7 führt. Bei der zuvor genannten Ausführungsform ist sicherzustellen, dass das verpresste Material des Steges in einen Freiraum entweichen kann. Dazu befindet sich vorteilhaft um den jeweiligen Steg herum eine Vertiefung, die in ihrer Größe dem maximal zu verpressenden Volumen des Steges entspricht. Dies kann z.B. dadurch erreicht werden, indem gemäß der Schnittdarstellung der Fig. 6 der Steg 8 entweder wellenförmig ausgelegt ist, so dass entsprechend der vergrößerten Darstellung der Einzelheit Y in Fig. 6 gemäß Fig. 7 die Querschnittsfläche A des wulstartig ausgebildeten Steges 8 einer Querschnittsfläche A' einer ringförmigen Vertiefung 9 entspricht, und so bei Verdrängen des Materials des Steges 8 die Vertiefung 9 ausgefüllt wird.

Fig. 8 zeigt eine alternative Ausgestaltung ähnlich der Fig. 6, dargestellt ist nur der vergrößerte Ausschnitt Y. Auf der Innenseite des Steges 8, der hier als etwa halbkreisförmige Wulst ausgebildet ist, schließt sich eine Schräge 10, die ähnlich einer Senkbohrung ausgebildet ist, an. Alternativ könnte hier auch eine Sacklochbohrung oder dergleichen vorgesehen sein. Auch hier ist sicherzustellen, dass das durch die Sacklochbohrung bzw. Senkbohrung 10 entnommene Volumen dem zusätzlichen Volumen des Steges 8 entspricht.

### Bezugszeichenliste

- 1: Trägerteil
- 2: Schraube
- 3: Kunststoffbauteil
- 4: Durchgangsbohrung
- 5: Abstandhülse
- 6: Schraubenkopf
- 7: Anschlagring
- 8: Steg
- 8.1, 8.2 etc.: Segmente des Steges
- 9: Vertiefung
- 10: Schräge
- 11: Gegenbohrung

## Patentansprüche

1. Anordnung umfassend ein Kunststoffbauteil (3), eine Schraube (2) mit einem Schraubenkopf (6), eine Hülse (5) sowie ein Trägerteil (1), wobei das Kunststoffbauteil (3) eine Durchgangsbohrung (4) aufweist, in der die Hülse (5) aufgenommen ist, durch die die Schraube (2) in eine Gegenbohrung (11) des Trägerteils (1) ragt und mit Befestigungsmitteln mit dem Trägerteil (1) verbunden ist, wobei der Schraubenkopf (6) einen Anschlagring (7) umfasst und auf der dem Trägerteil (1) abgewandten Seite des Kunststoffbauteils (3) angeordnet ist, **dadurch gekennzeichnet, dass** das Kunststoffbauteil (3) mindestens einen Steg (8) umfasst, der auf mindestens einer Seite der Durchgangsbohrung (4) über die Oberfläche des Kunststoffbauteils (3) hinausragt, wobei die axiale Dicke (LS) des Kunststoffbauteils (3) einschließlich Steg (8) größer ist als die Länge (LH) der Hülse (5) und die axiale Dicke (LK) des Kunststoffbauteils (3) ohne Steg (8) kleiner ist als die Länge (LH) der Hülse (5).

2. Anordnung nach dem vorhergehenden Anspruch, **dadurch gekennzeichnet, dass** sich der Steg (8) in Umfangsrichtung vollständig um die Durchgangsbohrung (4) erstreckt und beim Anziehen der Schraube (2) plastisch und/oder elastisch verformt bis der Anschlagring (7) auf der Hülse (5) aufliegt.

3. Anordnung nach einem der vorhergehenden Ansprüche, **dadurch gekennzeichnet, dass** der Steg (8) in radialer Richtung zumindest teilweise unterbrochen ist.

4. Anordnung nach Anspruch 1, **dadurch gekennzeichnet, dass** das Trägerteil (1) aus einem Metall mit einer Gewindebohrung oder aus einem Kunststoff mit einem Gewindeeinsatz für ein Befestigungsmittel gefertigt ist.

5. Anordnung nach Anspruch 4, **dadurch gekennzeichnet, dass** das Befestigungsmittel eine Mutter ist.

6. Anordnung nach einem der vorhergehenden Ansprüche, **dadurch gekennzeichnet, dass** die Stege (8) unter dem Schraubenkopf (6) oder der Seite des Kunststoffbauteils (3) angeordnet sind, die der Seite des Schraubenkopfes (6) abgewandt ist.

7. Anordnung nach dem vorhergehenden Anspruch, **dadurch gekennzeichnet, dass** am Steg (8) mindestens eine Ausnehmung (9, 10) im Kunststoffbauteil (3) angeordnet ist, sodass plastisch verformte Anteile des Steges (8) in diese verdrängt werden können und die Ausnehmung eine radiale Schräge (10) der Durchgangsbohrung (4) oder die Ausnehmung eine Vertiefung (9) des Kunststoffbauteils (3) ist.

## Claims

1. Arrangement comprising a plastic component (3), a screw (2) with a screw head (6), a bushing (5) and a support element (1), where the plastic component (3) has a through hole (4) in which the bushing (5) is received, through which the screw (2) protrudes into a matching hole (11) in the support element (1) and is joined to the support element (1) with means of fastening, where the screw head (6) includes a stop ring (7) and is situated on the side of the plastic component facing away from the support element (1), **characterized in that** the plastic component (3) includes at least one web (8), which projects beyond the surface of the plastic component (3) on at least one side of the through hole (4), the axial thickness (LS) of the plastic component (3) including web (8) being greater than the length (LH) of the bushing (5) and the axial thickness (LK) of the plastic component (3) without web (8) being less than the length (LH) of the bushing (5).

2. Arrangement according to the preceding claim, **characterized in that** the web (8) extends completely around the through hole (4) in the circumferential direction and is deformed plastically and elastically as the screw (2) is tightened, until the stop ring (7) bears against the bushing (5).

3. Arrangement according to one of the preceding claims, **characterized in that** the web (8) is at least partially interrupted in the radial direction.

4. Arrangement according to Claim 1, **characterized in that** the support element (1) is made of a metal with a threaded hole or of a plastic with a threaded insert for a means of attachment.

5. Arrangement according to Claim 4, **characterized in that** the means of attachment is a nut.

6. Arrangement according to one of the preceding claims, **characterized in that** the webs (8) are situated under the screw head (6) or the side of the plastic component (3) that faces away from the side with the screw head (6).

7. Arrangement according to the preceding claim, **characterized in that** at least one recess (9, 10) is situated at the web (8) in the plastic component, so that plastically deformed parts of the web (8) can be displaced into it, and the recess is a radial slope (10) of the through hole (4) or the recess is a depression (9) in the plastic component (3).

## Revendications

1. Dispositif comprenant un composant (3) en matière plastique, une vis (2) comportant une tête de vis (6), comprenant une douille (5) ainsi qu une pièce support (1), où le composant (3) en matière plastique présente un perçage traversant (4) dans lequel est logée la douille (5) à travers laquelle la vis (2) dépasse dans un contre-perçage (11) de la pièce support (1) et est reliée à la pièce support (1) par des moyens de fixation, où la tête de vis (6) comprend une bague de butée (7) et est disposée sur le côté du composant (3) en matière plastique, placé à l'opposé de la pièce support (1), **caractérisé en ce que** le composant (3) en matière plastique comprend au moins une partie pleine (8) qui, sur au moins un côté du passage traversant (4), dépasse de la surface du composant (3) en matière plastique, où l'épaisseur axiale (LS) du composant (3) en matière plastique, y compris de la partie pleine (8), est supérieure à la longueur (LH) de la douille (5), et l'épaisseur axiale (LK) du composant (3) en matière plastique, sans partie pleine (8), est inférieure à la longueur (LH) de la douille (5).

2. Dispositif selon la revendication précédente, **caractérisé en ce que** la partie pleine (8) s'étend, dans la direction circonférentielle, tout autour du perçage traversant (4) et, lors du serrage de la vis (2), se déforme de façon plastique et / ou élastique, jusqu'à ce que la bague de butée (7) s'applique sur la douille (5).

3. Dispositif selon l'une ou l'autre des revendications précédentes, **caractérisé en ce que** la partie pleine (8) est interrompue, au moins partiellement, dans la direction radiale.

4. Dispositif selon la revendication 1, **caractérisé en ce que** la pièce support (1) est fabriquée dans un métal, en comprenant un perçage fileté, ou bien dans une matière plastique, en comprenant un insert fileté servant de moyen de fixation.

5. Dispositif selon la revendication 4, **caractérisé en ce que** le moyen de fixation est un écrou.

6. Dispositif selon l'une quelconque des revendications précédentes, **caractérisé en ce que** les parties pleines (8) sont disposées au-dessous de la tête de vis (6) ou bien sous le côté du composant (3) en matière plastique qui est placé à l'opposé du côté de la tête de vis (6).

7. Dispositif selon la revendication précédente, **caractérisé en ce qu'**au moins un creux (9, 10) est disposé, sur la partie pleine (8), dans le composant (3) en matière plastique, de sorte que des portions de la partie pleine (8), plastiquement déformées, peuvent être déplacées dans ce creux, et le creux est un chanfrein radial (10) du perçage traversant (4), ou bien le creux est une cavité (9) du composant (3) en matière plastique.
